# EUROPÄISCHE PATENTSCHRIFT

(11) **EP 2 469 140 B1**
(45) Veröffentlichungstag und Bekanntmachung des Hinweises auf die Patenterteilung: **21.05.2014**
(21) Anmeldenummer: 11193363.6
(22) Anmeldetag: 13.12.2011
(51) Int. Cl.: F16K 39/02, F16K 31/06

(54) **Ventil**
Valve
Soupape

(30) Priorität: 21.12.2010 DE 102010055308
(43) Veröffentlichungstag der Anmeldung: 27.06.2012
(73) Patentinhaber: SVM Schultz Verwaltungs-GmbH & Co. KG, 87700 Memmingen (DE)
(72) Erfinder: Weiß, Johann, 88239 Wangen (DE)
(74) Vertreter: Schulz, Manfred

(56) Entgegenhaltungen:
- EP-A1- 0 753 695
- GB-A- 1 256 670
- US-A- 2 968 464
- US-A- 3 154 285

## Beschreibung

Die Erfindung betrifft ein Ventil, bestehend aus einer zwischen Zu- und Ableitung angeordneten Hauptdüse und einer Vorsteuerdüse, wobei die Hauptdüse einen Hauptdüsensitz aufweist, der von einem Dichtkörper verschließbar ist und die Vorsteuerdüse einen Vorsteuerdüsensitz aufweist, der von einem Vorsteuerdüsenkörper verschließbar ist und ein in dem Ventil angeordnetes, bewegbares Betätigungselement für das Öffenen beziehungsweise Schließen von Haupt- und Vorsteuerdüse.

Die vorgenannten gattungsgemäßen Ventile werden zum Beispiel eingesetzt, um Behälter die Medien mit hohem Druck beinhalten geregelt zu öffnen und zu schließen. Dabei ist die Anordnung so, dass der hohe Mediendruck auf dem Dichtkörper anliegt und die daraus resultierenden Druckkräfte den Dichtkörper auf den Hauptdüsensitz der Hauptdüse drückt. Der Antrieb des Betätigungselementes hat daher mindestens diese Haltekräfte zu überwinden, um die Hauptdüse zu öffnen. Als Antrieb für das Betätigungselement ist dabei zum Beispiel ein Elektromagnet vorgesehen, ohne hierauf die Erfindung beschränken zu wollen, wobei das Betätigungselement hierbei zum Beispiel als Anker ausgebildet ist.

Um entsprechend hohe Kräfte zum Öffenen der Hauptdüse zur Verfügung zu stellen, muss der Antrieb entsprechend groß und stark ausgebildet sein, was mit entsprechenden Kosten einhergeht. Es ist daher dem Stand der Technik bereits bekannt, das Ventil mit einer Vorsteuerdüse, die ebenfalls zwischen Zu- und Ableitung im Ventil angeordnet ist, auszustatten. Die Vorsteuerdüse besitzt dabei in der Regel ein deutlich kleineren Leitungsquerschnitt wie die Hauptdüse und dient dazu, als "gesteuerte Leckage" im Öffnungsfall die Druckdifferenz der Drücke zwischen Zu- und Ableitung soweit zu reduzieren, wodurch sich die resultierende Haltekraft, die auf dem Dichtkörper wirkt, ebenfalls verringern. Da der Querschnitt im Bereich der Vordüse deutlich geringer ist als bei der Hauptdüse, sind auch die Druckkräfte an der Vorsteuerdüse entsprechend geringer.

Diese, dem Stand der Technik bekannten Ausgestaltungen für ein Ventil, funktionieren zuverlässig bis zu einem Druckbereich von 300 bis 400 bar. Bei höheren Drücken erhöhen sich die Druckkräfte wieder entsprechend, weshalb für entsprechende Anwendungsfälle wieder stärker dimensionierte Antriebe notwendig sind. Dies geht einher mit höheren Kosten einerseits aber auch mit höherem Bauvolumen als für die Antriebe andererseits.

Die amerikanische Patentschrift US 2,968,464 offenbart ein Ventil, dessen Hauptdüse von einem Dichtkörper und dessen Vorsteuerdüse von einem Vorsteuerdüsenkörper verschließbar ist. Ein in dem Ventil angeordnetes, bewegbares Betätigungstelement für das Öffnen bzw. Schließen von Haupt- und Vorsteuerdüse wirkt dabei auf den Dichtkörper bzw. den Vorsteuerdüsenkörper. Beim Öffnen des Ventils hebt erst das bereits beschleunigte Betätigungselement den Vorsteuerdüsenkörper vom Vorsteuerdüsensitz ab und nach einer Reduzierung der Druckdifferenz zwischen den in Zu- bzw. Ableitung des Ventils herrschenden Drücken das Betätigungselement den Dichtkörper vom Hauptdüsensitz.

Die britische Patentschrift 1 256 670 betrifft ein Ventil, bei dem ein zylinderförmiger Vorsteuerdüsenkörper in einer Bohrung eines Betätigungselements gehalten ist und federgelagert gegen einen in einer vorderen Ausnehmung des Betätigungselements angeordneten und beweglich gehaltenen Dichtkörper anliegt.

Die Erfindung hat es sich zur Aufgabe gemacht zumindest einen der vorgenannten Nachteile zum vermeiden.

Zur Lösung dieser Aufgabe geht die Erfindung von einem Ventil aus, bei dem das bewegbare Betätigungselement für das Öffnen beziehungsweise Schließen von Haupt- und Vorsteuerdüse auf den Dichtkörper beziehungsweise dem Vorsteuerdüsenkörper wirkt, wobei beim Öffnen des Ventils erst das bereits beschleunigte Betätigungselement den Vorsteuerdüsenkörper vom Vorsteuerdüsensitz abhebt und nach einer Reduzierung der Druckdifferenz zwischen den Zu- beziehungsweise Ableitung herrschenden Drücken das Betätigungselement den Druckkörper vom Hauptsitz abhebt.

Der Vorsteuerdüsenkörper ist als konischer Körper oder als Kugel ausgebildet und ist durch eine Verstemmung des Endes einer Bohrung oder Ausnehmung des Betätigungselementes gehalten.

Bei bekannten Lösungen nach dem Stand der Technik wirkt der Antrieb des Betätigungselement sofort gegen die Druckkräfte die auf den Vorsteuerdüsenkörper wirken und diesen auf den Vorsteuerdüsensitz drücken. In diesem Fall ist eine ensprechende hohe Kraftentfaltung durch den Antrieb des Betätigungselementes notwendig. Das erfindungsgemäße Ventil löst diese Probleme zunächst dadurch, indem zunächst das Betätigungselement durch den Antrieb beschleunigt wird und noch keine unmittelbare Wirkung auf den Vorsteuerdichtkörper zu dessen Abhebung vom Vorsteuerdüsensitz erfolgt. Unter Ausnutzung der kinetischen Energie des bereits beschleunigten Betätigungselementes, also seines Schwunges, unter weiterer Kraftentfaltung am Betätigungselement, wird (kurz) nach dem Bewegungsstart des Betätigungselementes erst der Vorsteuerdüsenkörper vom Vorsteuerdüsensitz abgehoben. Ist die Vorsteuerdüse geöffnet und wirkt diese als "gesteuerte Leckage", erfolgt eine Vorflutung der Arbeitsleitung, also der Ableitung im Ventil, bis die Kraft, die am Betätigungselement angreift ausreicht, um den Druckkörper vom Hauptsitz abzuheben.

Ein Vorzug der Erfindung liegt dabei darin, dass weder die Baugröße des Antriebes des Ventiles beziehungsweise des gesamten Ventiles einerseits, noch der Antrieb selber zu vergrößern sind beziehungsweise hierfür größere Ausgestaltungen einzusetzen sind, was mit entsprechend höheren Kosten verbunden ist. Die geschickte Ausgestaltung im Ventil führt dazu, dass mit dem Ventil nach der Erfindung Medienströme mit deutlich höheren Drücken regel- beziehungsweise steuerbar sind.

Das erfindungsgemäße Ventil dient dabei natürlich zum Öffnen beziehungsweise Schließen des zwischen Zu- und Ableitung vorgesehenen Ventilkanals beziehungsweise der Haupt- und Vorsteuerdüse. Durch die entsprechende Stellung des Betätigungselementes erfolgt ein Öffnen oder Verschließen des Ventils. Die Vorsteuerdüse befindet sich dabei im Ventil ebenfalls zwischen Zu- und Ableitung.

In einer Ausgestaltung der Erfindung ist vorgesehen, dass der Vorsteuerdüsenkörper im Bedienungselement, insbesondere durch eine Vorsteuerfeder belastet, beweglich angeordnet ist. Die Aufgabe des Vorsteuerdüsenkörpers liegt darin, die Vorsteuerdüse zu öffnen oder zu verschließen. In der Regel wird dabei eine Materialpaarung von Vorsteuerdüsensitz und Vorsteuerdüsenkörper gewählt, bei welchem zum Einen ein dauerhaftes und zum Anderen ein dichtes Zusammenwirken gewährleistet ist. So umfasst die Erfindung zum Beispiel Vorschläge, bei welchem der Vorsteuerdüsenkörper aus verhältnismässig hartem Material besteht, zum Beispiel aus Metall oder ähnlichem. In der gleichen Weise ist es auch möglich, dass der Vorsteuerdüsenkörper aus einem Elastomer oder einem anderen elastischen Material besteht. Durch die erfindungsgemäße Weiterentwicklung wird vorgeschlagen, dass die Vorsteuerdüsenkörper, der bevorzugt in diesem Fall aus einem verhältnismässig harten und stabilen Material besteht, im Betätigungselement insbesondere durch eine Vorsteuerfeder belastet beweglich angeordnet ist. Ein verhältnismäßig harter Vorsteuerdüsenkörper wirkt dann zum Beispiel mit einer Vorsteuerdüse zusammen, die aus elastischem Material besteht, ohne die Erfindung hierauf zu beschränken. Bei hinreichend genauen Passagen der zusammenwirkenden Flächen, sind erfindungsgemäß auch ähnliche oder gleichharte Materialien für die Düse und den Dichtkörper einsetzbar. Der Einsatz der erfindungsgemäß vorgeschlagenen Vorsteuerfeder erreicht, dass der Vorsteuerdüsenkörper immer mit einer gewissen Kraft auf den Vorsteuerdüsensitz gepresst ist. Somit ist die genaue Positionierung des Betätigungselementes im Bezug auf die Vorsteuerdüse nicht mehr entscheidend für die Dichtigkeit beziehungsweise den Zustand der Vorsteuerdüse (geöffnet oder geschlossen).

In diesem Zusammenhang ist es von Vorteil, dass der Vorsteuerdüsenkörper als vom Betätigungselement getrenntes, separates Bauteil ausgebildet ist. Dem Stand der Technik ist ein Einsatz einer Vorsteuerdüse hinlänglich bekannt, welches durch eine entsprechende Fläche am Betätigungselement geöffnet oder geschlossen wird. Durch die erfindungsgemäße Ausstaltung des Ventiles derart, dass der Vorsteuerdüsenkörper als separates Bauteil realisiert ist, der relativ zum Betätigungselement auch beweglich angeordnet ist und eine zusätzliche Funktionalität an dem erfindungsgemäßen Ventil schafft, nämlich eine Entkopplung der Bewegung des Betätigungselementes (zumindest für einen gewissen Zeitabschnitt) von der Aufgabe des Öffnens oder Schließens der Vorsteuerdüse.

In einer Variante ist vorgesehen, dass sich die Vorsteuerfeder beim Öffnen der Vorsteuerdüse (zumindest teilweise) entspannt. Durch diesen Entspannungsvorgang der Vorsteuerfeder wird erreicht, dass der Vorsteuerdüsenkörper, auf welchen die Vorsteuerfeder wirkt, noch auf den Vorsteuerdüsenkörper wirkt und diesen auf den Vorsteuerdüsensitz drückt, auch wenn sich das Betätigungselement bereits in die entgegengesetzte Richtung bewegt.

Dies ist zum Beispiel eine Möglichkeit, wie eine Beschleunigung des Betätigungselementes erfolgt, ohne bereits die Haupt- oder Vorsteuerdüse zu öffnen. Neben dieser Variante sind aber auch andere Möglichkeiten denkbar.

In einer Ausgestaltung der Erfindung ist vorgesehen, dass zwischen Zu- und Ableitung ein Ventilkanal vorgesehen ist und die Hauptdüse beziehungsweise Vorsteuerdüse im Ventilkanal angeordnet ist. Die Zuleitung endet in einer Ventilkammer, an welcher sowohl die Hauptdüse als auch die Vorsteuerdüse anschließt.

Alternativ hierzu ist in einer Variante vorgesehen, dass zwischen Zu- und Ableitung ein Ventilkanal und zusätzlich ein Ventilnebenkanal vorgesehen ist und die Hauptdüse im Ventilkanal und die Vorsteuerdüse im Ventilnebenkanal angeordnet ist. Da über die Hauptdüse der wesentliche Medienstrom gesteuert beziehungsweise geregelt wird, wird in einem Bypass oder Ventilnebenkanal die Vorsteuerdüse angeordnet, da über diesen nur eine Vorflutung des in Strömungsrichtung hinter der Hauptdüse liegenden Ableitung zu erfolgen hat und durch die kleineren Querschnitte die Druckkräfte die beim Öffnen der Vorsteuerdüse zu überwinden sind, deutlich geringer sind. Daher ist es alternativ auch günstig, einen Ventilnebenkanal vorzusehen.

In einer weiteren Variante ist vorgesehen, dass der Ventilnebenkanal zumindest teilweise im Betätigungselement, zum Beispiel als Querbohrung im Betätigungselement, angeordnet ist. Die Erfindung ist im Hinblick auf die Anordnung des Ventilnebenkanales nicht beschränkt. Es ist von Vorteil, den Ventilnebenkanal im bewegten Betätigungselement oder im übrigen Ventilgehäuse anzuordnen. Insbesondere wird durch die Integration des Ventilnebenkanales im Betätigungselement Bauraum gespart.

Desweiteren schlägt eine Weiterentwicklung der Erfindung vor, dass der Dichtkörper den Vorsteuersitz trägt und die Vorsteuerdüse den Dichtkörper durchdringt und die Hauptdüse mündet. Diese erfindungsgemäße Variante kombiniert mehrere Vorteile in sich. Zunächst ist es eine sehr platzsparende Ausgestaltung, da der vorhandene Dichtkörper nicht nur zum Abdichten des Hauptdüsensitzes dient, sondern zusätzlich auch noch den Vorsteuerdüsensitz trägt. Dabei weist der Dichtkörper eine dichtkörperdurchdringende Bohrung, Kanal, Ausnehmung oder ähnliches auf, die in die Hauptdüse mündet. Somit bildet der Dichtkörper selber auch die Vorsteuerdüse.

In der bevorzugten beziehungsweise alternativen Ausgestaltung der Erfindung ist der Dichtkörper aus einem Elastomer Thermoplast, Metall oder Keramik geschaffen. Der Dichtkörper ist in dieser Ausgestaltung multifunktional. Zunächst wirkt er mit dem Hauptdüsensitz zusammen. Die Hauptdüse aus einem härteren Material, zum Beispiel aus Metall, gebildet, als der Dichtkörper. Gleichzeitig bildet der Dichtkörper selber den Vorsteuerdüsensitz. Hier wirkt ein weiches Material des Vorsteuerdüsensitzes mit dem Vorsteuerdüsenkörper, der gegebenenfalls auch aus Metall besteht, zusammen. Der Dichtkörper übernimmt auch in der Düsenfunktion abdichtende Aufgaben.

Die Erfindung sieht die verschiedensten Materialien für die Ausgestaltung des Dichtkörpers vor. Der Dichtkörper kann aus verhältnismässig harten Materialien wie zum Beispiel Metall oder Keramik oder auch verhältnismässig weichen Materialien wie Elastomeren, Thermoplast oder anderen Kunststoffen bestehen. Dadurch ist es möglich, das erfindungsgemässe Ventil sehr variabel auszubilden. Je nach Ausführung der Hauptdüse ist es möglich, die Werkstoffpaarung von Dichtkörper und Vorsteuerdüsenkörper anzupassen. Ist die Hauptdüse aus hartem Material, so wird der Dichtkörper vorzugsweise aus weichen und der Vorsteuerdüsenkörper aus harten Material gebildet werden. Ist die Hauptdüse aus weichem Material, so wird der Dichtkörper vorzugsweise aus harten und der Vorsteuerdüsenkörper wiederum aus weichen Material gebildet sein.

Natürlich birgt dieser Doppelnutzen, der mit dem Dichtkörper realisiert wird entsprechende Kostenvorteile, da die ansonsten notwendigen Einzelbauteile vermieden werden.

Desweiteren ist in einer Variante vorgesehen, dass der Dichtkörper im vorderen Ende des Betätigungselementes beweglich, insbesondere parallel zur Bewegungsrichtung des Betätigungselementes gelagert ist. Bevorzugterweise ist dabei der Dichtkörper in einer Ausnehmung angeordnet, wobei die Tiefe der Ausnehmung etwas größer ist als die Dicke des Dichtkörpers (parallel zur Bewegungsrichtung des Dichtkörpers gesehen) woraus sich ergibt, dass der Dichtkörper etwas beweglich im Betätigungselement gelagert ist. Das Wesentliche dabei ist, dass bei dieser Ausgestaltung der Erfindung nicht die Mantelfläche des Dichtkörpers eine Abdichtfunktion übernimmt, sondern die zur Bewegungsrichtung des Betätigungselementes winklig, insbesondere rechtwinklig, orientierten Flächen, die einerseits als Dichtkörper andererseits als Vorsteuerdüsensitz wirken. Diese konstruktive Lösung ist vorteilhaft, weil somit die Dauerhaftigkeit des Dichtkörpers gewährleistet wird, da die Flächen nicht parallel zur Bewegungsrichtung des Betätigungselementes an einer hierzu relativ still stehenden Fläche bewegt und verschlissen werden.

Der Dichtkörper selbst ist in einer Weiterentwicklung, die gegebenenfalls auch eigenständig und losgelöst von dem Hauptgedanken dieser Anmeldung gesehen werden kann, weitergebildet. Zunächst ist der Dichtkörper in dem Betätigungselement so gelagert, dass sich dieser gegenüber dem Hauptdüsensitz selbst zentriert. Durch den erfindungsgemäßen Vorschlag werden die Fluchtungsfehler ausgeglichen und somit die Leckagemöglichkeit deutlich reduziert. Dadurch ist es möglich, das erfindungsgemäße Ventil beziehungsweise auch die spezielle Ausgestaltung dieses Dichtkörpers auch in sehr hohen Druckbereichen der zu steuernden beziehungsweise zu regelden Medienströme einzusetzen.

Insbesondere schlägt eine Variante vor, dass der Dichtkörper zum Beispiel konisch oder zumindest halbkugelartig, zumindest in dem mit dem Hauptdüsensitz zusammenwirkenden Bereich ausgebildet ist. Es ergibt sich somit nicht nur ein Dichtungsrand am Hauptdüsensitz, sondern eine relativ breite Dichtfläche, um somit auch gleichzeitig, da der Dichkörper parallel zur Fläche des Hauptdüsensitzes beweglich ist auch eine erheblich verschleißreduzierte Abdichtung des Hauptsitzes.

Das erfindungsgemäße Ventil wird bevorzugt zum Regeln und Steuern von Medienströmen, insbesondere gasförmigen (alternativ auch flüssigen) oder kalten beziehungsweise tiefkalten Medien unter hohem Druck, bevorzugt mehr als 500 bar, insbesondere mehr als 600 bar, oder sogar mehr als 750 bar eingesetzt. Gerade für diese verhältnismässig hohen Drücke sind nach dem Stand der Technik sehr viel größer bauende Ventile, insbesondere Antriebe des Betätigungselementes notwendig, was die Kosten solcher Ventile erheblich erhöht, was durch den erfindungsgemäßen Vorschlag vermieden wird, da durch den erfindungsgemäßen Vorschlag mit einem geringen konstruktiven Aufwand das baugleiche Ventil in einem höheren Druckbereich einsetzbar ist.

In einer Variante ist vorgesehen, dass das Betätigungselement ein Anker eines Elektromagneten vorgesehen ist und das von einer stromdurchflossenen Spule erzeugte Magnetfeld den Anker bewegt beziehungsweise beschleunigt. In dieser erfindungsgemäßen Variante wird als Antrieb für das Betätigungselement ein Elektromagnet vorgeschlagen. Auf den Anker beziehungsweise das Betätigungselement wird das Magnetfeld, welches von einem elektrischen Strom durchströmten Spule gebildet wird. Dies ist aber nicht die einzige Variante, wie das Betätigungselement zu realisieren ist, es sind zum Beispiel auch Varianten nach dem Elektromotorprinzip oder auch nach dem Linearmotorprinzip in analoger Weise verwendbar.

In der Zeichnung ist die Erfindung insbesondere in einem Ausführungsbeispiel schematisch dargestellt. Es zeigen:
- Fig. 1: in einer Seitendarstellung ein erfindungsgemäßes Ventil
- Fig. 2a, b, c, d: jeweils in einer vergrößerten Detailansicht nach Fig. 1 verschiedene Stellungen während des Öffnungsprozesses des erfindungsgemäßen Ventils.

In den Figuren sind gleiche oder einander entsprechende Elemente jeweils mit den gleichen Bezugszeichen bezeichnet und werden daher, sofern nicht zweckmäßig, nicht erneut beschrieben.

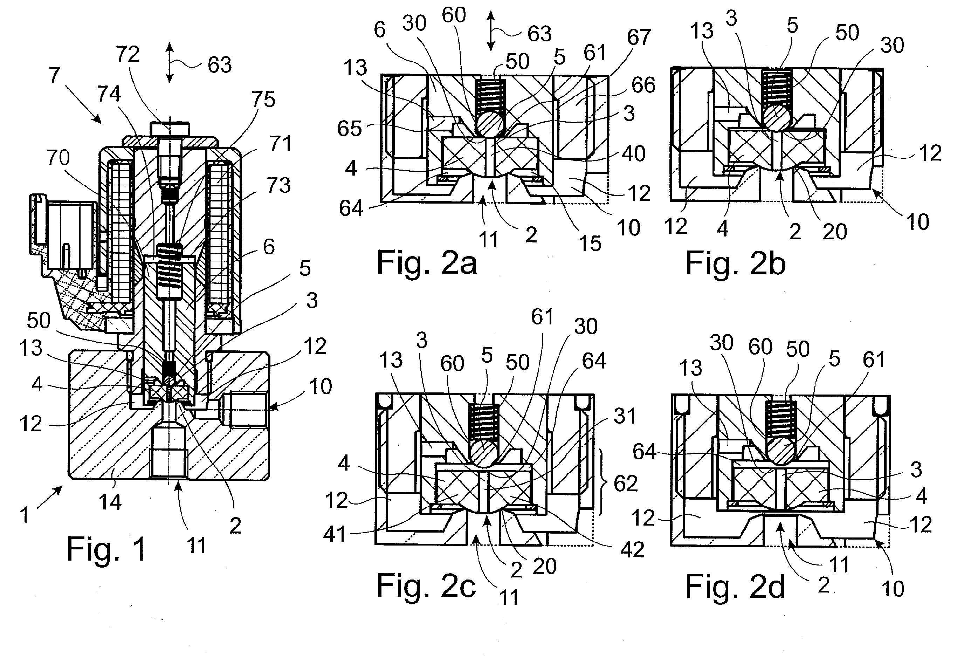

In Fig. 1 ist das erfindungsgemäße Ventil zusammen mit einem Elektromagneten 7, der hier beispielsweise als Antrieb für das Betätigungselement 6 dient, gezeigt.

Der Elektromagnet 7 besitzt typischerweise eine Spule 71, die eine Vielzahl von Drahtwicklungen trägt. Fließt elektrischer Strom durch den Draht, welcher auf der Spule 71 aufgewickelt ist, so wird ein Magnetfeld erzeugt, das im Inneren der Spule 71 im wesentlichen achsparallel zur Spulenachse 72 ist. Die Spule 71 umgibt zumindest teilweise einen Ankerraum 73 in welchem der Anker 70 längsbeweglich, parallel zur Spulenachse 72 gelagert ist. In dem hier gezeigten Ausführungsbeispiel ist der Anker 70 das Betätigungselement 6.

Das Betätigungselement 6 ragt in den Ventilblock 14 des Ventils 1 herein. Im Ventil 1, insbesondere im Ventilblock 14 sind auch eine Zuleitung 10 sowie eine Ableitung 11 rechtwinklig zueinander angeordnet. Die Zuleitung 10 und die Ableitung 11 werden durch einen Ventilkanal 12 miteinander verbunden, die Ventilkammer 15 ist Teil des Ventilkanals 12. In der Ventilkammer 15 ist zumindest die Hauptdüse 2 angeordnet, die von dem Dichtkörper 4 verschlossen wird. Der Dichtkörper 4 wird durch das Betätigungselement 6 entweder auf den Hauptdüsensitz 20 der Hauptdüse 2 aufgesetzt beziehungsweise aufgedrückt oder abgehoben. Die in Fig. 1 gezeigte Ausgestaltung des erfindungsgemäßen Ventils 1 und des damit verbundenen Elektromagneten 7 ist dabei so gewählt, dass der Anker 70/Betätigungselement 6 bei Strombeaufschlagung nach oben bewegt wird und den Luftspalt 74 des Ankerraumes 73 schließt. Diese Bewegung erfolgt dabei gegen die rückstellende Kraft der Ankerfeder 75. Im nicht strombeaufschlagten Zustand drückt daher die Ankerfeder 75 den Anker 70/Betätigungselement 6 derart nach unten, dass der am vorderen Ende 62 im Betätigungselement 6 gehaltene Dichtkörper 4 auf den Hauptdüsensitz 20 der Hauptdüse 2 drückt.

Das hier gezeigte erfindungsgemäße Prinzip (auf welches sich die Erfindung nicht beschränkt) weist neben der Hauptdüse 2 auch eine Vorsteuerdüse 3 auf. Auch die Vorsteuerdüse 3 ist zwischen Zuleitung 10 und Ableitung 11 angeordnet. Sie ist dabei in einem Ventilnebenkanal 13 vorgesehen, der Ventilnebenkanal 13 mündet in die Ventilkammer 15 beziehungsweise ist mit dem Ventilkanal 12 kommunizierend verbunden.

Detailierter ergibt sich dies zum Beispiel aus Fig. 2a.

Die Fig. 2a zeigt die geschlossene Stellung des Ventils 1. Der anliegende Druck wirkt über die Zuleitung 10, den Ventilkanal 12 und die Ventilkammer 15 und presst diese zusätzlich zu der Kraft der Ankerfeder 75 auf den Hauptdüsensitz 20 der Hauptdüse 2.

Die Anordnung ist derart geschickt gewählt, dass der Dichtkörper 4 nun nicht nur für den Verschluss des Hauptdüsensitzes 20 beziehungsweise Hauptdüse 2 dient, sondern seinerseits die Vorsteuerdüse 3 bildet. Hierzu wird der Dichtkörper 4 von einer Öffnung oder Bohrung 40 komplett durchsetzt, die Bohrung 40 mündet in die Hauptdüse 2 und zwar auf der der Ableitung 11 zugewandten Seite.

Die Vorsteuerdüse 3 wird verschlossen durch ein Vorsteuerdüsenkörper 5, der auf den Vorsteuerdüsensitz 30 gepresst wird. Hierzu dient eine Vorsteuerfeder 50, die auf den Vorsteuerdüsenkörper 5 drückt. Dabei ist die Anordnung so gewählt, dass sich der Vorsteuerdüsenkörper 5 im vorderen Ende des Betätigungselementes 6 befindet.

Die Ausgestaltung des Betätigungselementes 6 ist dabei so gewählt, dass der in die Ventilkammer 15 ragende Bereich des Betätigungselementes 6 im vorderen Ende 62 zunächst in einer Ausnehmung 64 den Dichtkörper 4 aufnimmt. Die Bewegungsrichtung des Betätigungselementes 6 ist durch den Pfeil 63 in Fig. 1 beziehungsweise Fig. 2a gezeigt. Bezüglich des vorderen Endes des Betätigungselementes 6, hinter dem Dichtkörper 4, ist der Vorsteuerdüsenkörper 5 in einer Bohrung 60 angeordnet. Der Durchmesser der Bohrung 60 ist dabei deutlich kleiner als der Durchmesser der Ausnehmung 64, welche den Dichtkörper 4 aufnimmt. Die Bohrung 60, wie auch die Ausnehmung 64 sind coaxial zur Spulachse 72.

Die Tiefe der Ausnehmung 64 in Bewegungsrichtung 63 (Richtung der Spulenachse 72) ist dabei größer als die Dicke des Dichtkörpers 4. Somit füllt der Dichtkörper 4 nicht die gesamte Ausnehmung 64 aus. Des Weiteren befindet sich in dem Betätigungselement 6 eine radial (bezüglich der Spulenachse 72) verlaufende Querbohrung 65, welche als Ventilnebenkanal 13 wirkt und die Ausnehmung 64 mit der Ventilkammer 15 und somit auch der Zuleitung 10 verbindet. Hierzu besitzt die Betätigungselementführung 66 im unteren Bereich eine Aufweitung 67, über welche die Ventilkammer 15 mit dem Ventilnebenkanal 13 verbunden ist. Die Führungsaufgabe erfolgt dann oberhalb der Aufweitung 67, wo sich der Durchmesser wieder verjüngt.

Die Anordnung ist nun so gewählt, dass der Vorsteuerdüsenkörper 5 in der Bohrung 60 des Betätigungselementes 6 gelagert ist und grundsätzlich die Bewegung des Betätigungselementes 6 mitausführt, allerdings drückt die Vorsteuerfeder 50 den Vorsteuerdüsenkörper 5 nach unten derart, dass der Vorsteuerdüsenkörper 5 die Vorsteuerdüse 3 verschließt. Damit der Vorsteuerdüsenkörper 5 nicht aus der Bohrung 60 herausfällt, ist an der Bohrung 60 beziehungsweise der Ausnehmung am unteren Rand eine Verstemmung 61 vorgesehen, die als Anschlag für den Vorsteuerdüsenkörper 5 dient. Die Verstemmung ist aber geometrisch so gewählt, dass die Kugel, aus welcher der Vorsteuerdüsenkörper 5 ausgebildet ist, zumindest teilweise immernoch über den Verstemmungsrand nach unten vorsteht und so auf den Vorsteuerdüsensitz 30 zu wirken vermag. Der eingangsseitig anliegende Druck liegt über die Zuleitung 10, dem Ventilkanal 12, die Ventilkammer 15 und die Ventilnebenkanal 13 auch in der Ausnehmung 64 an der Vorsteuerdüse 3 an. Der Dichtkörper 4 wirkt dabei nicht nur als Vorsteuerdüse 3, sondern auch gleichzeitig als Dichtkörper 4 für die Hauptdüse 2. Der Pfiff der Erfindung liegt nun darin, dass erkannt worden ist, dass durch die Dynamik der Bewegung des Betätigungselementes 6 beziehungsweise des Ankers 70 zum Öffnen der Vorsteuerdüse 3 genutzt wird. Dies wird mit Hilfe von Fig. 2b deutlich. Hier ist die Situation gezeigt, dass die Spule 71 erregt ist und der Anker 70 beziehungsweise Betätigungselement 6 um eine gewisse Weglänge nach oben versetzt ist. Das Betätigungselement 6 wird dabei durch die erregte Spule 71 im druckausgeglichenen Raum der Ventilkammer 15 beschleunigt. Wesentlich dabei ist, dass diese Bewegung des Betätigungselementes 6 nach oben noch nicht zu einer Öffnung weder der Vorsteuerdüse 3 noch der Hauptdüse 2 geführt hat. Der Dichtkörper 4 sitzt nach wie vor dicht auf dem Hauptdüsensitz 20 der Hauptdüse 2, der Vorsteuerdüsenkörper 5 sitzt immer noch dicht, durch die Vorsteuerfeder 50 unterstützt, auf dem Vorsteuerdüsensitz 30 der Vorsteuerdüse 3.

Im hier gezeigten Ausführungsbeispiel wird das Betätigungselement 6 auf einer Strecke von wenigen Zehntel Millimeter bis ca. 1,5 mm, oder mehr, je nach Ausgestaltung beschleunigt. Dieser "Schwung" beziehungsweise kinetische Energie des Betätigungselementes 6 wird dazu genutzt, dass Vorsteuerdüsenkörper 5 von dem Vorsteuerdüsensitz 30 abzuheben, wenn nämlich die Verstemmung 61 an dem Vorsteuerdüsenkörper 5 anliegt. Hierbei hat sich die Vorsteuerfeder 50 dann um ein geringes Maß entspannt. Diese Situation ist in Fig. 2c gezeigt, bei welcher immernoch der Dichtkörper 4 dicht auf dem Hauptdüsensitz 20 der Hauptdüse 2 sitzt, aber die "gezielte Leckage" über die Vorsteuerdüse 3 besteht.

Über den Ventilnebenkanal 13, die Ausnehmung 64 und der Durchdringung 31, die in dem Dichtkörper 4 als Vorsteuerdüse 3 angeordnet ist, erfolgt eine Vorflutung der Arbeitsleitung beziehungsweise Ableitung 11. Die anfänglich hohe Druckdifferenz zwischen der Zuleitung 10 und der Ableitung 11 sinkt bis die Magnetkraft ausreicht und die Druckkräfte, die den Dichtkörper 4 auf dem Hauptdüsensitz 20 halten, abzuheben und so auch die Hauptdüse 2 zu öffnen. Diese Situation ist in Fig. 2d gezeigt. Die Erfindung umfasst dabei auch den wesentlichen Aspekt, dass die Vorsteuerdüse 3 sich mit dem Betätigungselement 6 mitbewegt. Sie ist in dem hier gezeigten Ausführungsbeispiel nicht als statische Düse realisiert, sondern als dynamische Düse.

Im Zusammenhang mit Fig. 2 sei noch auf folgenden wesentlichen, weiteren Aspekt der Erfindung hingewiesen: Der Dichtkörper 4 besitzt nicht nur eine gewisse axiale Beweglichkeit (parallel zur Spulenachse 72), sondern auch eine gewisse radiale Beweglichkeit (ebenfalls bezogen auf die Spulenachse 72). Dies führt zu einem Selbstjustierungseffekt des Dichtkörpers 4 auf dem Hauptdüsensitz 20. Dabei ist zu beachten, dass der Dichtkörper 4 gemäß der zum Beispiel in Fig. 2c gezeigten Variante nicht als einfacher Zylinder ausgebildet ist, sondern an einem zylindrischen beziehungsweise scheibenartigen Grundkörper 41 auf der der Hauptdüse 2 zugewandten Seite ein kegeliger, konischer, halbkugelartiger oder segmentkugelartiger Teilkörper 42 mittig angesetzt ist. Durch die gewisse radiale Beweglichkeit des Dichtkörpers 4 in der Ausnehmung 64 positioniert sich der Dichtkörper 4 immer optimal auf dem Hauptdüsensitz 20, unter Vermeidung von Fluchtungsfehlern und damit Reduzierung von Leckage.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Ventil, bestehend aus einer zwischen Zu- und Ableitung (10, 11) angeordneten Hauptdüse (2) und einer Vorsteuerdüse (3), wobei die Hauptdüse (2) einen Hauptdüsensitz (20) aufweist, der von einem Dichtkörper (4) verschließbar ist und die Vorsteuerdüse (3) einen Vorsteuerdüsensitz (30) aufweist, der von einem Vorsteuerdüsenkörper (5) verschließbar ist und ein in dem Ventil (1) angeordnetes, bewegbares Betätigungselement (6) für das Öffnen beziehungsweise Schließen von Haupt- und Vorsteuerdüse (2, 3) auf den Dichtkörper (4) beziehungsweise den Vorsteuerdüsenkörper (5) wirkt, wobei beim Öffnen des Ventils (1) erst das bereits beschleunigte Betätigungselement (6) den Vorsteuerdüsenkörper (5) vom Vorsteuerdüsensitz (30) abhebt und nach einer Reduzierung der Druckdifferenz zwischen den in Zu- beziehungsweise Ableitung (10, 11) herrschenden Drücken das Betätigungselement (6) den Dichtkörper (4) vom Hauptdüsensitz (20) abhebt, **dadurch gekennzeichnet, dass** der Vorsteuerdüsenkörper (5) als konischer Körper oder als Kugel ausgebildet ist und durch eine Verstemmung (61) des Endes einer Bohrung (60) oder Ausnehmung des Betätigungselementes (6) gehalten ist.

2. Ventil nach Anspruch 1, **dadurch gekennzeichnet, dass** der Vorsteuerdüsenkörper (5) im Betätigungselement (6), insbesondere durch eine Vorsteuerfeder (50) belastet, beweglich angeordnet ist.

3. Ventil nach einem der vorhergenden Ansprüche, **dadurch gekennzeichnet, dass** der Vorsteuerdüsenkörper (5) als vom Betätigungselement (6) getrenntes, separates Bauteil ausgebildet ist.

4. Ventil nach einem der vorhergehenden Ansprüche, **dadurch gekennzeichnet, dass** zwischen Zu- und Ableitung (10, 11) ein Ventilkanal (12) vorgesehen ist und die Haupt- beziehungsweise Vorsteuerdüse (2, 3) im Ventilkanal (12) angeordnet sind.

5. Ventil nach einem der vorhergehenden Ansprüche, **dadurch gekennzeichnet, dass** zwischen Zu- und Ableitung (10, 11) ein Ventilkanal (12) und zusätzlich ein Ventilnebenkanal (13) vorgesehen ist und die Hauptdüse (2) im Ventilkanal (12) und die Vorsteuerdüse (3) im Ventilnebenkanal (13) angeordnet ist.

6. Ventil nach einem der vorhergehenden Ansprüche, **dadurch gekennzeichnet, dass** der Ventilnebenkanal (13) zumindest teilweise im Betätigungselement (6), zum Beispiel als Bohrung oder Querbohrung (65) im Betätigungselement (6), angeordnet ist und/oder sich die Vorsteuerfeder (50) beim Öffnen der Vorsteuerdüse (3) entspannt.

7. Ventil nach einem der vorhergehenden Ansprüche, **dadurch gekennzeichnet, dass** der Dichtkörper (4) den Vorsteuerdüsensitz (30) trägt und die Vorsteuerdüse (3) den Dichtkörper (4) durchdringt und in die Hauptdüse (2) mündet und/oder der Dichtkörper (4) im vorderen Ende (62) des Betätigungselementes (6) beweglich, insbesondere parallel zur Bewegungsrichtung (63) des Betätigungselementes (6) gelagert ist.

8. Ventil nach einem der vorhergehenden Ansprüche, **gekennzeichnet durch** der Dichtkörper (4) aus einem Elastomer, Thermoplast, Metall oder Keramik besteht.

9. Ventil nach einem der vorhergehenden Ansprüche, **gekennzeichnet durch** der Dichtkörper (4) in einer vorderen Ausnehmung (64) des Betätigungselementes (6) angeordnet und beweglich gehalten ist und der Ventilnebenkanal (13) hinter dem Dichtkörper (4) in die Ausnehmung (64) mündet.

10. Ventil nach einem der vorhergehenden Ansprüche, **gekennzeichnet durch** eine Vorsteuerdüse (3), die an dem Betätigungselement (6) sich mit dem Betätigungselement (6) mitbewegend angeordnet ist.

11. Ventil nach einem der vorhergehenden Ansprüche, **gekennzeichnet durch** einen sich gegenüber dem Hauptdüsensitz (20) zentrierenden Dichtkörper (4).

12. Ventil nach einem der vorhergehenden Ansprüche, **gekennzeichnet durch** eine konische oder zumindest halbkugelartige Ausgestaltung des mit dem Hauptdüsensitz (20) zusammenwirkenden Bereich des Dichtkörpers (4).

13. Ventil nach einem der vorhergehenden Ansprüche, **dadurch gekennzeichnet, dass** das Ventil zum Regeln beziehungsweise Steuern von Medienströmen insbesondere gasförmigen oder kalten beziehungsweise tiefkalten Medien unter hohem Druck, bevorzugt mehr als 500 bar, insbesondere mehr als 600 bar oder mehr als 750 bar dient.

14. Ventil nach einem der vorhergehenden Ansprüche, **dadurch gekennzeichnet, dass** als Betätigungselement (6) ein Anker (70) eines Elektromagneten (7) vorgesehen ist und das von einer stromdurchflossenen Spule (71) erzeugte Magnetfeld den Anker (70) bewegt beziehungsweise beschleunigt.

## Claims

1. Valve consisting of a main nozzle (2) arranged between inlet and outlet (10, 11), and a pilot nozzle (3), wherein the main nozzle (2) has a main nozzle seat (20) that is sealable by a sealing body (4) and the pilot nozzle (3) has a pilot nozzle seat (30) that is sealable by a pilot nozzle body (5), and a movable operating element (6) arranged in the valve (1) acts on the sealing body (4) and/or the pilot nozzle (5) for opening and/or closing of main nozzle and pilot nozzle (2, 3), wherein during opening the valve (1) first the already accelerated operating element (6) lifts the pilot nozzle body (5) from the pilot nozzle seat (30), and after reducing the pressure difference between the pressure prevailing in the inlet and/or the outlet (10, 11) the operating element (6) lifts the sealing body (4) from the main nozzle seat (20), **characterized in that** the pilot nozzle body (5) is configured as a conical body and is held by a caulking (61) of the end of a boring (60) or recess of the operating element (6).

2. Valve according to claim 1, **characterized in that** the pilot nozzle body (5) is arranged movably in the operating element (6), charged in particular by a pilot spring (50).

3. Valve according to one of the preceding claims, **characterized in that** the pilot nozzle body (5) is configured as a separate component, separated from the operating element (6).

4. Valve according to one of the preceding claims, **characterized in that** between the inlet and the outlet (10, 11) a valve channel (12) is provided, and the main and/or pilot nozzle (2, 3) are arranged in the valve channel (12).

5. Valve according to one of the preceding claims, **characterized in that** between inlet and outlet (10, 11) a valve channel (12) and additionally a valve subchannel (13) are provided, and the main nozzle (2) is arranged in the valve channel (12) and the pilot nozzle (3) is arranged in the valve subchannel (13).

6. Valve according to one of the preceding claims, **characterized in that** the valve subchannel (13) is arranged at least partly in the operating element (6), for example as a boring or diagonal boring (65) in the operating element (6), and/or the pilot spring (50) relaxes when the pilot nozzle (3) is opened.

7. Valve according to one of the preceding claims, **characterized in that** the sealing body (4) carries the pilot nozzle seat (30), and the pilot nozzle (3) penetrates the sealing body (4) and leads in the main nozzle (2), and/or the sealing body (4) is supported movably, in particular parallel to the direction of movement (63) of the operating element, in the front end (62) of the operating element (6).

8. Valve according to one of the preceding claims, **characterized in that** the sealing body (4) consists of an elastomer, thermoplast, metal, or ceramics.

9. Valve according to one of the preceding claims, **characterized in that** the sealing body (4) is arranged and held movably in a front recess (64) of the operating element (6), and the valve subchannel (13) flows in the recess (64) behind the sealing body (4).

10. Valve according to one of the preceding claims, **characterized by** a pilot nozzle (3) that is arranged at the operating element (6) and moves along with it.

11. Valve according to one of the preceding claims, **characterized by** a sealing body (4) centering relatively to the main nozzle seat (20).

12. Valve according to one of the preceding claims, **characterized by** a conical or at least hemispherical configuration of the area of the sealing body (4) interacting with the main nozzle seat (20).

13. Valve according to one of the preceding claims, **characterized in that** the valve serves for adjusting and/or controlling of media flows of in particular gas or cold and/or supercooled media under high pressure, preferably more than 500 bar, in particular more than 600 bar or more than 750 bar.

14. Valve according to one of the preceding claims, **characterized in that** as an operating element (6) an armature (70) of a solenoid (7) is provided, and the magnetic field generated by the coil (71) flown through by current moves and/or accelerates the armature (70).

## Revendications

1. Soupape consistant en une buse principale (2) située entre des lignes d'alimentation et d'évacuation (10, 11) et en une buse pilote (3), la buse principale (2) possède un siège de buse principale (20) pouvant être fermé par un corps d'étanchéité (4) et la buse pilote (3) comporte un siège de buse pilote (30) pouvant être fermé par un corps de buse pilote(5), et en un élément d'actionnement (6) mobile situé à l'intérieur de la soupape (1) permettant d'agir sur le corps d'étanchéité (4) ou sur le corps de buse pilote (5) afin de commander l'ouverture ou la fermeture des buses principale et pilote (2, 3) de façon à ce que, lors de l'ouverture de la soupape (1), l'élément d'actionnement (6) déjà accéléré soulève d'abord le corps de buse pilote (5) du siège de buse pilote (30) puis, après une réduction de la différence des pressions entre la ligne d'alimentation et la ligne d'évacuation (10, 11), l'élément d'actionnement (6) soulève le corps d'étanchéité (4) du siège de buse principale (20), **caractérisée en ce que** le corps de buse pilote (5) possède une forme de cône ou de sphère maintenue par un sertissage (61) à l'extrémité d'un perçage (60) ou d'un évidement au niveau de l'élément d'actionnement (6).

2. Soupape selon la revendication 1, **caractérisée en ce que** le corps de buse pilote (5) est maintenu mobile à l'intérieur de l'élément d'actionnement (6) et en particulier maintenu par une pression exercée par un ressort pilote (50).

3. Soupape selon une des revendications précédentes, **caractérisée en ce que** le corps de buse pilote (5) est configuré comme une pièce individuelle, séparée de l'élément d'actionnement (6).

4. Soupape selon une des revendications précédentes, **caractérisée en ce qu'**un canal de soupape (12) est prévu entre la ligne d'alimentation et la ligne d'évacuation (10, 11) et **en ce que** les buses principale et pilote (2, 3) sont situées dans le canal de soupape (12).

5. Soupape selon une des revendications précédentes, **caractérisée en ce qu'**un canal de soupape (12) et un canal auxiliaire de soupape (13) sont prévus entre la ligne d'alimentation et la ligne d'évacuation (10, 11) et **en ce que** la buse principale (2) est située dans le canal de soupape (12) et la buse pilote (3) dans le canal auxiliaire de soupape (13).

6. Soupape selon une des revendications précédentes, **caractérisée en ce que** le canal auxiliaire de soupape (13) est au moins partiellement situé à l'intérieur de l'élément d'actionnement (6), par exemple en tant que perçage ou perçage transversal (65) dans l'élément d'actionnement (6) et/ou **en ce que** le ressort pilote (50) se détend lors de l'ouverture de la buse pilote (3).

7. Soupape selon une des revendications précédentes, **caractérisée en ce que** le corps d'étanchéité (4) supporte le siège de buse pilote (30) et **en ce que** la buse pilote (3) traverse le corps d'étanchéité (4) et débouche dans la buse principale (2) et/ou en ce que le corps d'étanchéité (4) est fixé au niveau de l'extrémité avant (62) de l'élément d'actionnement (6) de façon mobile et de préférence parallèlement à la direction du mouvement (63) de l'élément d'actionnement (6).

8. Soupape selon une des revendications précédentes, **caractérisée par** un corps d'étanchéité (4) fabriqué en élastomère, en matière thermoplastique, en métal ou en céramique.

9. Soupape selon une des revendications précédentes, **caractérisée par** un corps d'étanchéité (4) maintenu de façon mobile en un évidement (64) dans une partie avant de l'élément d'actionnement (6) et par un canal auxiliaire de soupape (13) débouchant derrière le corps d'étanchéité (4) dans l'évidement (64) .

10. Soupape selon une des revendications précédentes, **caractérisée par** une buse pilote (3) située au niveau de l'élément d'actionnement (6) en se déplaçant avec l'élément d'actionnement (6).

11. Soupape selon une des revendications précédentes, **caractérisée par** un corps d'étanchéité (4) qui se centre par rapport au siège de buse principale (20).

12. Soupape selon une des revendications précédentes, **caractérisée par** une configuration conique ou au moins demi-sphérique de la partie du corps d'étanchéité (4) qui interagit avec le siège de buse principale (20).

13. Soupape selon une des revendications précédentes, **caractérisée en ce que** la soupape sert à réguler et à contrôler les flux des milieux, en particulier des milieux gazéiformes ou des milieux froids voire d'un froid extrême et sous haute pression, de préférence au-dessus de 500 bar, en particulier plus de 600 bar, voire plus de 750 bar.

14. Soupape selon une des revendications précédentes, **caractérisée en ce que** l'élément d'actionnement (6) est une armature (70) d'un électroaimant (7) et **en ce que** le champ magnétique produit par une bobine (71) parcourue d'un courant déplace et accélère l'armature (70).
